# EUROPÄISCHE PATENTSCHRIFT

(11) **EP 3 080 020 B1**
(45) Veröffentlichungstag und Bekanntmachung des Hinweises auf die Patenterteilung: **27.09.2017**
(21) Anmeldenummer: 14821536.1
(22) Anmeldetag: 11.12.2014
(51) Int. Cl.: B65G 45/16

(54) **VORRICHTUNG ZUM ABSTREIFEN VON MATERIAL VON EINEM FÖRDERGURT EINES GURTFÖRDERERS**
APPARATUS FOR STRIPPING OFF MATERIAL FROM A CONVEYING BELT OF A BELT CONVEYOR
DISPOSITIF DE RACLAGE D'UN MATÉRIAU SUR UNE BANDE TRANSPORTEUSE D'UN TRANSPORTEUR À BANDE

(30) Priorität: 12.12.2013 DE 102013113934
(43) Veröffentlichungstag der Anmeldung: 19.10.2016
(73) Patentinhaber: Scrapetec GmbH, 47475 Kamp-Lintfort (DE)
(72) Erfinder: DÜNNWALD, Wilfried, 47475 Kamp-Lintfort (DE)
(74) Vertreter: Cohausz & Florack
(86) Internationale Anmeldenummer: PCT/EP2014/077424
(87) Internationale Veröffentlichungsnummer: WO 2015/086763

(56) Entgegenhaltungen:
- WO-A1-2009/121938
- BR-A- PI0 403 621
- FR-A1- 2 586 236
- JP-U- H0 331 120
- JP-U- S61 122 221
- US-A1- 2004 069 598

## Beschreibung

Die Erfindung betrifft eine Vorrichtung zum Abstreifen von Material von einem Fördergurt eines Gurtförderers im Bereich der Rundung einer Abwurftrommel, unterhalb der Abwurfstelle des Gurtförderers, mit einer Vielzahl von Abstreifgliedern, die aneinandergereiht angeordnet und durch mindestens zwei längliche, mit Abstand voneinander angeordnete Tragelemente getragen sind, wobei mindestens eines der Abstreifglieder ein erstes Abstreifelement und ein dem ersten Abstreifelement in Laufrichtung des Fördergurtes nachfolgendes zweites Abstreifelement aufweist.

Eine derartige Vorrichtung ist aus der WO 2009/121938 A1 bekannt. Die bekannte Vorrichtung zeichnet sich dadurch aus, dass sie sich an die Gurtoberfläche anpassen kann, relativ wenig Platz beansprucht und bei schonender Behandlung des Fördergurtes eine hohe Reinigungswirkung bietet. Ein einteilig oder mehrteilig ausgebildeter Abstreifkörper ist dabei aus biegeelastischem Material, vorzugsweise Kunststoff oder Elastomer hergestellt, wobei der jeweilige Abstreifkörper zwei dem Fördergurt zugewandte Kantenbereiche aufweist, die durch eine hohe Schleißfestigkeit aufweisende Schleißelemente, beispielsweise Leisten aus Hartmetall gebildet sind. Das obere, in Gurtlaufrichtung gesehen erste Schleißelement wirkt dabei als Abstreifelement, während das untere, in Gurtlaufrichtung gesehen nachfolgende Schleißelement der Abstützung des Abstreifkörpers dient und keinerlei Abstreiffunktion hat. Das biegeelastische Material (Matrixmaterial), in welchem die Schleißelemente eingefasst, beispielsweise eingegossen sind, ist relativ teuer.

Des Weiteren ist aus der FR 2 586 236 A1 eine Vorrichtung zum Abstreifen von Material von einem Fördergurt eines Gurtförderers im Bereich des Untergurtes des Gurtförderers bekannt. Die Vorrichtung weist einen quer zur Laufrichtung des Fördergurtes angeordneten Längsträger auf, dessen Enden in zwei mit Abstand voneinander angeordneten Gehäusen derart gelagert ist, dass der Längsträger senkrecht zur Unterseite des Untergurtes verstellbar ist. An dem Längsträger sind eine Vielzahl zweiarmiger Hebel befestigt, die quer zu dem Längsträger, aneinandergereiht angeordnet sind. An den Enden des jeweiligen zweiarmigen Hebels sind Anschläge aus Kautschuk angebracht, an denen jeweils ein einarmiger Hebel (Arm) befestigt ist, der an seinem Ende ein dem Untergurt zugeordnetes Abstreifelement in Form einer Schaberklinge trägt. Die einarmigen Hebel und die Schaberklingen sind dabei in vier Reihen gestaffelt zueinander angeordnet.

Davon ausgehend lag der vorliegenden Erfindung die Aufgabe zugrunde, eine weitere Vorrichtung der eingangs genannten Art zu schaffen, die sich an die Gurtoberfläche optimal anpasst, relativ wenig Platz beansprucht, bei schonender Behandlung des Fördergurtes eine verbesserte Reinigungswirkung bietet und kostengünstiger herstellbar ist.

Diese Aufgabe wird erfindungsgemäß durch eine Vorrichtung mit den Merkmalen des Anspruchs 1 gelöst. Bevorzugte und vorteilhafte Ausgestaltungen der erfindungsgemäßen Vorrichtung sind in den Unteransprüchen angegeben.

Die erfindungsgemäße Vorrichtung ist dadurch gekennzeichnet, dass das Abstreifglied, welches das erste Abstreifelement und das in Laufrichtung des Fördergurtes nachfolgende zweite Abstreifelement aufweist, einen Hebemechanismus aufweist, der ein Abheben des ersten Abstreifelements vom Fördergurt bei Verschiebung des ersten Abstreifelements in Laufrichtung des Fördergurtes bewirkt, wobei das erste Abstreifelement relativ zu dem Hebemechanismus beweglich an dem Abstreifglied gelagert ist, und wobei das erste Abstreifelement an einem Stab befestigt ist, der in einer Führung verschiebbar gehalten ist, wobei der Hebemechanismus an der Führung angebracht oder angeformt ist.

Das jeweilige Abstreifglied der erfindungsgemäßen Vorrichtung erfordert keine teure Matrix aus Gummi, Kunststoff oder Elastomer. Vielmehr lassen sich die Abstreifglieder der erfindungsgemäßen Vorrichtung kostengünstig aus metallischen Bauelementen, beispielsweise aus Stahl hergestellten Bauelementen fertigen. Insbesondere lassen sich die einzelnen Abstreifglieder - abgesehen von ihren Abstreifelementen - relativ schmal ausführen, so dass zwischen den aneinandergereihten Abstreifgliedern ein entsprechend großer Freiraum verbleibt. Durch diesen Freiraum, der durch die zwischen den aneinandergereihten Abstreifgliedern vorgesehenen Öffnungen definiert ist, werden Materialansammlungen hinter den Abstreifgliedern vermieden. Die bei der Montage der erfindungsgemäßen Vorrichtung zu handhabende Masse bzw. die im Betrieb der Vorrichtung durch Spannmittel zu tragende Masse ist somit reduziert, was die Montage und Abspannung (Lagerung) der Vorrichtung vereinfacht. Zudem sind die zwischen den Abstreifgliedern vorgesehenen Öffnungen von Vorteil, weil sie der Abstreifvorrichtung eine hohe Flexibilität verleihen, so dass sich die Abstreifvorrichtung an eine schräg zur Gurtlaufrichtung verlaufende Raumkurve im Bereich der vom Fördergurt umschlungenen Abwurftrommel optimal anpassen lässt.

Das dem ersten Abstreifelement in Laufrichtung des Fördergurtes nachfolgende Abstützelement dient als Sekundärabstreifer, durch den die Reinigungswirkung der Abstreifvorrichtung erheblich verbessert wird. Hierzu ist das zweite Abstreifelement (Sekundärabstreifer) vorzugsweise leistenförmig ausgebildet und relativ zu der Abwurftrommel bzw. dem dort anliegenden Fördergurt im Normalbetrieb vorzugsweise so angestellt, dass es mit dem anliegenden Fördergurt bzw. der Mantelfläche der Abwurftrommel einen Winkel zwischen 70° und 110°, vorzugsweise zwischen 80° und 100° einschließt. Die Höhe der wirksamen Abstreiffläche des zweiten Abstreifelements über dem Fördergurt beträgt beispielsweise mindestens 1 cm, vorzugsweise mindestens 1,5 cm, besonders bevorzugt mindestens 2 cm.

Die aneinandergereihten Abstreifglieder der erfindungsgemäßen Vorrichtung lassen sich optimal an eine schräg zur Laufrichtung des Fördergurtes verlaufende Raumkurve, deren Verlauf insbesondere vom Durchmesser der Abwurftrommel abhängt, anpassen. Die Raumkurve kann dabei im Wesentlichen einem Längenabschnitt einer Schraubenlinie (Helix) entsprechen.

Die mindestens zwei länglichen Tragelemente der erfindungsgemäßen Vorrichtung sind vorzugsweise flexibel und/oder elastisch ausgebildet. Sie sind beispielsweise jeweils aus mindestens einem Seil, insbesondere Drahtseil, und/oder mindestens einer Metallkette gebildet. Alternativ kann mindestens eines der Tragelemente auch aus einem flexiblen bzw. elastischen Metallstab, vorzugsweise Stahlstab, insbesondere Edelstahlstab gebildet sein. Die verwendeten Tragelemente (Seile, Metallketten und/oder Metallstäbe) sind so flexibel, dass die aneinandergereihten Abstreifglieder mittels der Tragelemente an der Abwurftrommel entlang einer Raumkurve positionierbar sind. Mittels mindestens einem der mindestens zwei länglichen Tragelemente sind die aneinandergereihten Abstreifglieder an den an der Rundung der Abwurftrommel anliegenden Fördergurt gezogen bzw. ziehbar.

Eines dieser mindestens zwei länglichen Tragelemente ist dabei an dem ersten Abstreifelement (Primärabstreifer) und mindestens ein zweites dieser Tragelemente nahe dem zweiten Abstreifelement (Sekundärabstreifer) angeordnet. Das nahe dem Sekundärabstreifer angeordnete bzw. diesem zugeordnete längliche Tragelement ist vorzugsweise ungefedert oder stärker gefedert als das an dem ersten Abstreifelement (Primärabstreifer) angeordnete Tragelement an Festpunkten des Gurtförderers befestigt.

Bei einer durch einen größeren Gurtschaden oder einen im Fördergurt festsitzenden Fremdkörper verursachten übermäßigen Krafteinwirkung, die tangential zu dem die Abwurftrommel umschlingenden Fördergurt auf das erste Abstreifelement des betreffenden Abstreifgliedes einwirkt, erfolgt eine Verschiebung (zumindest) dieses Abstreifelements in Laufrichtung des Fördergurtes, wobei der an dem Abstreifglied ausgebildete Hebemechanismus bewirkt, dass das Abstreifelement bei seiner Verschiebung in Laufrichtung des Fördergurtes von diesem abgehoben wird und somit über die schadhafte Stelle des Fördergurtes bzw. den darin festsitzenden Fremdkörper störungsfrei hinweg gleitet. Hierdurch wird eine schonende Reinigung des Fördergurtes sichergestellt.

Die Verschiebbarkeit des ersten Abstreifelements (Primärabstreifers) lässt sich zuverlässig und relativ einfach realisieren, wenn dieses Abstreifelement erfindungsgemäß an einem Stab befestigt ist, der in einer Führung verschiebbar gehalten ist, wobei der Hebemechanismus an der Führung angebracht oder angeformt ist.

Nach einer bevorzugten Ausgestaltung der erfindungsgemäßen Vorrichtung ist die Führung kanalförmig ausgebildet und weist vorzugsweise ein geschlossenes Querschnittsprofil auf. Der Stab ist dabei vorzugsweise aus federelastischem Material, beispielsweise aus Federstahl gefertigt. Hierdurch lässt sich die schonende Reinigungswirkung der Vorrichtung weiter verbessern.

Eine weitere vorteilhafte Ausgestaltung der erfindungsgemäßen Vorrichtung besteht darin, dass die Führung und/oder der Stab bogenförmig ausgebildet sind, wobei die Krümmung der Führung bzw. des Stabes an die Rundung der Abwurftrommel des Gurtförderers im Wesentlichen angepasst ist. Diese Ausgestaltung trägt zu einer kompakten Bauweise der erfindungsgemäßen Vorrichtung bei.

Nach einer weiteren bevorzugten Ausgestaltung der erfindungsgemäßen Vorrichtung weist das erste Abstreifelement eine mit dem Stab verbundene Halterung auf, die eine Durchgangsöffnung oder Klemme zur Anbindung eines der länglichen Tragelemente, insbesondere eines Tragseiles aufweist. Diese nahe bzw. unmittelbare Anordnung des Tragelements an dem ersten Abstreifelement begünstigt die schonende Reinigung des Gurtförderers, wobei relativ geringe Spannkräfte zum Spannen des länglichen Tragelements, insbesondere Tragseiles, ausreichen.

Ebenfalls günstig für die schonende Reinigung des Gurtförderers ist eine Ausgestaltung der erfindungsgemäßen Vorrichtung, bei welcher die Führung mit einem Ansatz versehen ist, der eine Durchgangsöffnung oder Klemme zur Anbindung des mindestens einen zweiten länglichen Tragelements aufweist. Vorzugsweise wird dabei die Durchgangsöffnung oder Klemme zur Anbindung des mindestens einen zweiten länglichen Tragelements in Laufrichtung des Fördergurtes hinter dem zweiten Abstreifelement angeordnet ist. Sollte das obere, am ersten Abstreifelement angeordnete längliche Tragelement (z.B. Tragseil) reißen, bewirkt die Anordnung des zweiten länglichen Tragelements in Gurtlaufrichtung hinter dem zweiten Abstreifelement ein Drehmoment, durch welches dann das erste Abstreifelement vom Fördergurt abgehoben wird. Dadurch wird eine eventuell Beschädigung des Fördergurtes, die das erste Abstreifelement bei gerissenem Tragseil bzw. Tragelement verursachen könnte, verhindert.

Nach einer weiteren vorteilhaften Ausgestaltung der erfindungsgemäßen Vorrichtung ist das zweite Abstreifelement an der Führung befestigt. Das zweite Abstreifelement behält in diesem Fall auch bei Verschiebung des oberen, ersten Abstreifelements im Wesentlichen seine Lage. Das zweite Abstreifelement wird in diesem Fall im Wesentlichen durch das untere, ihm zugeordnete Tragelement getragen und erhält durch dasselbe auch den für seine Reinigungswirkung notwendigen Andruck an den Fördergurt.

Alternativ kann das zweite Abstreifelement aber auch an dem Stab befestigt sein. In diesem Fall wird bei Verschiebung des oberen, ersten Abstreifelements zugleich auch das untere, zweite Abstreifelement in gleicher Richtung verschoben. Das untere Tragelement dient in diesem Fall insbesondere der Einleitung der Andruckkraft in das zweite Abstreifelement, so dass dieses gegen den Fördergurt gedrückt wird und der Hebemechanismus betätigt wird.

Eine weitere vorteilhafte Ausgestaltung der erfindungsgemäßen Vorrichtung ist dadurch gekennzeichnet, dass die Führungen der Stäbe benachbarter Abstreifglieder voneinander in einem Maß beabstandet sind, welches größer als die Breite, vorzugsweise größer als das Doppelte, insbesondere größer als das Dreifache oder Vierfache der Breite der jeweiligen Führung ist. Die oberen Abstreifelemente der benachbarten Abstreifglieder sind dabei aneinanderliegend angeordnet, wobei ihre Vorderkanten vorzugsweise leicht stufenförmig versetzt zueinander angeordnet sind. Zwischen den einzelnen Abstreifgliedern ist somit relativ große Lücken (Freiraum) vorhanden. Durch diesen Freiraum, d.h. durch die zwischen den Abstreifglieder vorhandenen relativ großen Öffnungen kann am Fördergurt anhaftendes Material, welches sich vom Fördergurt löst, austreten. Hierdurch wird verhindert, dass sich ablösendes Material hinter den Abstreifgliedern aufbaut.

Zur Erzielung einer hohen Reinigungswirkung ist es ferner von Vorteil, wenn gemäß einer weiteren Ausgestaltung der erfindungsgemäßen Vorrichtung die zweiten Abstreifelemente benachbarter Abstreifglieder überlappend zueinander angeordnet sind, und zwar derart, dass ein Abstreifelement von einem in Laufrichtung des Fördergurtes gesehen vorgeordneten Abstreifelement eines benachbarten Abstreifgliedes teilweise überdeckt ist und selbst ein in Laufrichtung des Fördergurtes nachgeordnetes Abstreifelement eines benachbarten Abstreifgliedes teilweise überdeckt.

Der Hebemechanismus der erfindungsgemäßen Vorrichtung lässt sich in verschiedenen Varianten ausführen. Eine konstruktionstechnisch relativ einfache und zuverlässige Ausgestaltung des Hebemechanismus ist dadurch gekennzeichnet, dass das Abstreifglied mit einem Stützelement versehen ist, welches im Normalbetrieb vom Fördergurt beabstandet ist oder diesen ohne oder mit nur geringer Andruckkraft kontaktiert, und welches sich bei Verschiebung des ersten Abstreifelements in Laufrichtung des Fördergurtes auf dem Fördergurt abstützt, wobei die Führung des Stabes, an dem das erste Abstreifelement befestigt ist, in Bezug auf die Rundung der Abwurftrommel so geformt und ausgerichtet ist, dass das erste Abstreifelement bei seiner Verschiebung in Laufrichtung des Fördergurtes von letzterem abgehoben wird.

Eine weitere konstruktionstechnisch relativ einfache und zuverlässige Ausgestaltung des Hebemechanismus ist durch einen keilartigen Körper gekennzeichnet, der eine Aufschiebefläche oder Aufschiebekante definiert, wobei eine oder die Halterung des ersten Abstreifelements bei Verschiebung desselben in Laufrichtung des Fördergurtes auf die Aufschiebefläche oder Aufschiebekante aufgeschoben und dadurch vom Fördergurt abgehoben wird.

Eine andere vorteilhafte Ausgestaltung der erfindungsgemäßen Vorrichtung ist dadurch gekennzeichnet, dass der Hebemechanismus als Hebelgelenkmechanismus ausgeführt ist. In diesem Fall kann der Hebemechanismus vorzugsweise so ausgeführt sein, dass im Normalbetrieb, d.h. wenn das obere, erste Abstreifelement zum Abstreifen von anhaftendem Material am Fördergurt anliegt, keiner der Gelenkarme des Hebelgelenkmechanismus den Fördergurt kontaktiert.

Eine weitere vorteilhafte Ausgestaltung der erfindungsgemäßen Vorrichtung ist dadurch gekennzeichnet, dass der Hebemechanismus als Federhebelmechanismus ausgeführt ist. Auch in diesem Fall kann der Hebemechanismus vorzugsweise so ausgeführt sein, dass im Normalbetrieb, d.h. wenn das obere, erste Abstreifelement zum Abstreifen von anhaftendem Material am Fördergurt anliegt, keine der Federn (Hebelfedern) des Federhebelmechanismus den Fördergurt kontaktiert. Eine weitere vorteilhafte Ausgestaltung der erfindungsgemäßen Vorrichtung ist dadurch gekennzeichnet, dass die Abstreifglieder miteinander durch Verbindungselemente verbunden sind, wobei je zwei benachbarte Abstreifglieder durch mindestens zwei der Verbindungselemente miteinander verbunden sind. Bei dieser Ausgestaltung werden die Abstreifglieder nicht dadurch miteinander verbunden, dass ein längliches Tragelement bzw. Zugelement (z.B. ein Drahtseil) durch Durchgangsöffnungen der aneinandergereihten Abstreifglieder durchgeführt wird, sondern die Abstreifglieder werden durch Verbindungselemente aneinander gekettet. Hierdurch kann relativ kostengünstig eine flexible bzw. gelenkige Verbindung der Abstreifglieder untereinander realisiert werden.

In diesem Zusammenhang sieht eine bevorzugte Ausgestaltung der erfindungsgemäßen Vorrichtung vor, dass das erste Abstreifelement eine mit dem Stab verbundene Halterung aufweist, wobei die Halterungen zweier benachbarter Abstreifglieder durch mindestens eines der Verbindungselemente miteinander verbunden sind, und wobei die Verbindungselemente platten- oder laschenförmig ausgebildet sind. Eine weitere bevorzugte Ausgestaltung der erfindungsgemäßen Vorrichtung ist dadurch gekennzeichnet, dass die Führung mit einem Ansatz versehen ist, der Verbindungselemente zur Anbindung eines entsprechenden Ansatzes eines benachbarten Abstreifglieds aufweist.

Nachfolgend wird die Erfindung anhand einer mehrere Ausführungsbeispiele darstellenden Zeichnung näher erläutert. Es zeigen schematisch:
- Fig. 1: eine Abwurftrommel eines Gurtförderers mit einem Fördergurt und aneinandergereihten Abstreifgliedern einer erfindungsgemäßen Vorrichtung zum Abstreifen von am Fördergurt anhaftendem Material;
- Fig. 2 und Fig. 3: ein Abstreifglied der Vorrichtung der Fig. 1 an einem Abschnitt eines eine Abwurftrommel umschlingenden Fördergurtes, im Normalbetriebszustand bzw. nach Verschiebung des oberen Abstreifelements (Primärabstreifers), jeweils in einer Seitenansicht;
- Fig. 4: das Abstreifglied der Fig. 2 in einer Draufsicht;
- Fig. 5: ein zweites Ausführungsbeispiel eines Abstreifgliedes einer erfindungsgemäßen Vorrichtung an einem Abschnitt eines eine Abwurftrommel umschlingenden Fördergurtes, im Normalbetriebszustand, in einer Seitenansicht;
- Fig. 6 und Fig. 7: ein drittes Ausführungsbeispiel eines Abstreifgliedes einer erfindungsgemäßen Vorrichtung an einem Abschnitt eines eine Abwurftrommel umschlingenden Fördergurtes, im Normalbetriebszustand bzw. nach Verschiebung des oberen Abstreifelements (Primärabstreifers), jeweils in einer Seitenansicht;
- Fig. 8: ein viertes Ausführungsbeispiel eines Abstreifgliedes einer erfindungsgemäßen Vorrichtung an einem Abschnitt eines eine Abwurftrommel umschlingenden Fördergurtes, im Normalbetriebszustand, in einer Seitenansicht;
- Fig. 9: eine Abwurftrommel eines Gurtförderers mit einem Fördergurt und aneinandergereihten Abstreifgliedern einer weiteren erfindungsgemäßen Vorrichtung (fünftes Ausführungsbeispiel);
- Fig. 10 und Fig. 11: ein Abstreifglied der Vorrichtung der Fig. 9 an einem Abschnitt eines eine Abwurftrommel umschlingenden Fördergurtes, im Normalbetriebszustand bzw. nach Verschiebung des oberen Abstreifelements (Primärabstreifers), jeweils in einer Seitenansicht;
- Fig. 12: das Abstreifglied der Fig. 10 in einer Draufsicht;
- Fig. 13: ein sechstes Ausführungsbeispiel eines Abstreifgliedes einer erfindungsgemäßen Vorrichtung an einem Abschnitt eines eine Abwurftrommel umschlingenden Fördergurtes, im Normalbetriebszustand, in einer Seitenansicht;
- Fig. 14: eine Abwurftrommel eines Gurtförderers mit einem Fördergurt und aneinandergereihten Abstreifgliedern einer weiteren erfindungsgemäßen Vorrichtung (siebtes Ausführungsbeispiel);
- Fig. 15: ein Abstreifglied der Vorrichtung der Fig. 14 an einem Abschnitt eines eine Abwurftrommel umschlingenden Fördergurtes in einer Seitenansicht;
- Fig. 16: das Abstreifglied der Fig. 15 in einer Draufsicht;
- Fig. 17: eine Abwurftrommel eines Gurtförderers mit einem Fördergurt und aneinandergereihten Abstreifgliedern einer weiteren erfindungsgemäßen Vorrichtung (achtes Ausführungsbeispiel); und
- Fig. 18: zwei miteinander verbundene Abstreifglieder der Vorrichtung der Fig. 17 in einer Draufsicht.

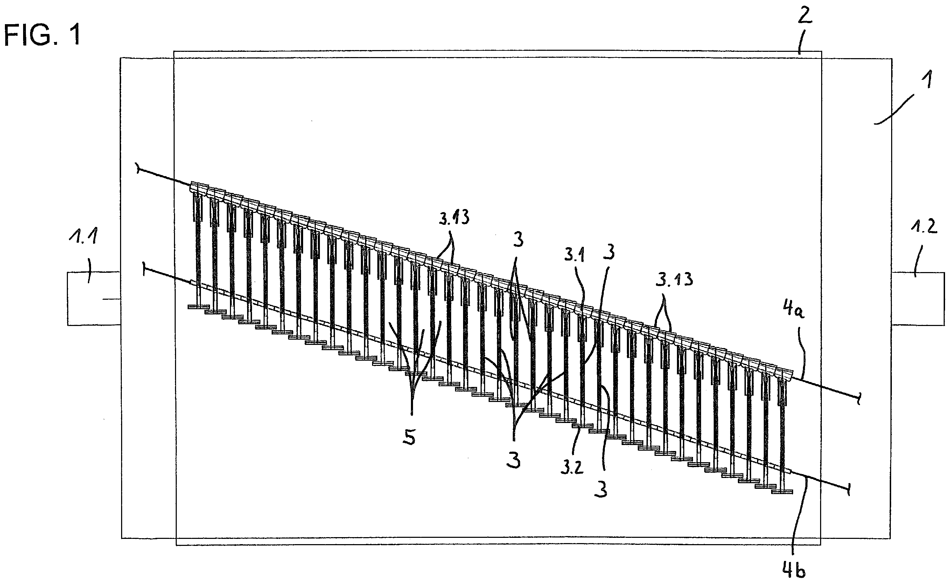

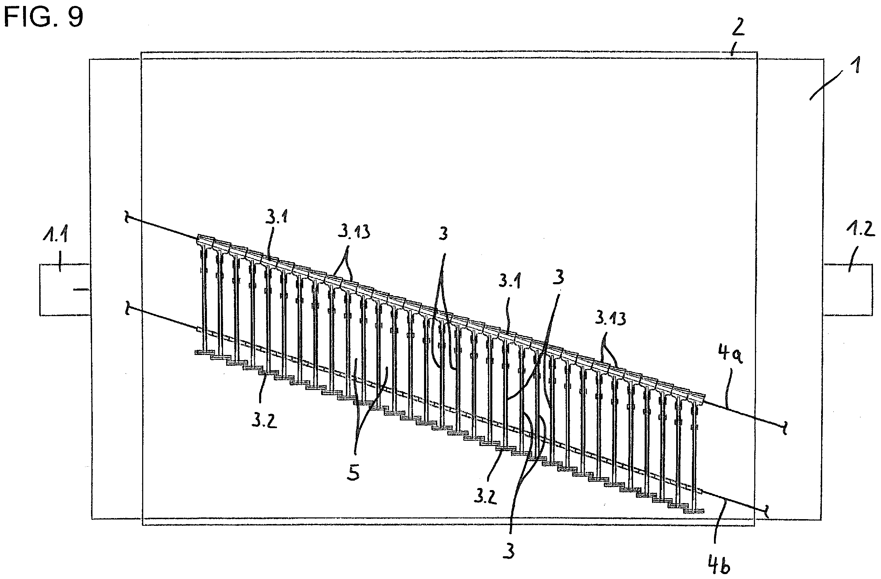

In den Figuren 1 und 9 ist eine Abwurf- bzw. Umlenktrommel 1 eines Gurtförderers dargestellt. Mit 1.1,1.2 sind Achszapfen oder Wellenenden der Abwurftrommel 1 bezeichnet. An der Rundung der gurtumschlungenen Abwurftrommel 1, und zwar unterhalb des Bereichs, an dem das Fördergut (nicht gezeigt) vom Fördergurt 2 abgeworfen wird, ist eine Abstreifvorrichtung angeordnet, die aus einer Vielzahl von aneinandergereihten Abstreifgliedern 3 gebildet ist. Durch die Abstreifglieder 3 wird noch am Gurt 2 haftendes Fördergut vom Gurt abgetrennt.

Die Länge der aus Abstreifgliedern 3 gebildeten Reihe entspricht etwa der Breite des Fördergurtes 2. Die Abstreifglieder 3 werden von mindestens zwei länglichen flexiblen Tragelementen 4a, 4b getragen. Die flexiblen Tragelemente 4a, 4b bestehen beispielsweise aus Seilen, vorzugsweise aus Drahtseilen. Alternativ oder ergänzend kann das jeweilige Tragelement 4a, 4b auch aus einer Metallkette und/oder einem flexiblem Rundstahl gebildet sein.

Das jeweilige Abstreifglied 3 weist in Laufrichtung des Fördergurtes 2 betrachtet ein erstes Abstreifelement 3.1 und ein nachfolgendes zweites Abstreifelement 3.2 auf. Das erste Abstreifelement 3.1 kann auch als oberes Abstreifelement oder Primärabstreifer bezeichnet werden. Dementsprechend kann das zweite Abstreifelement 3.2 auch als Sekundärabstreifer oder unteres, zweites Abstreifelement bezeichnet werden.

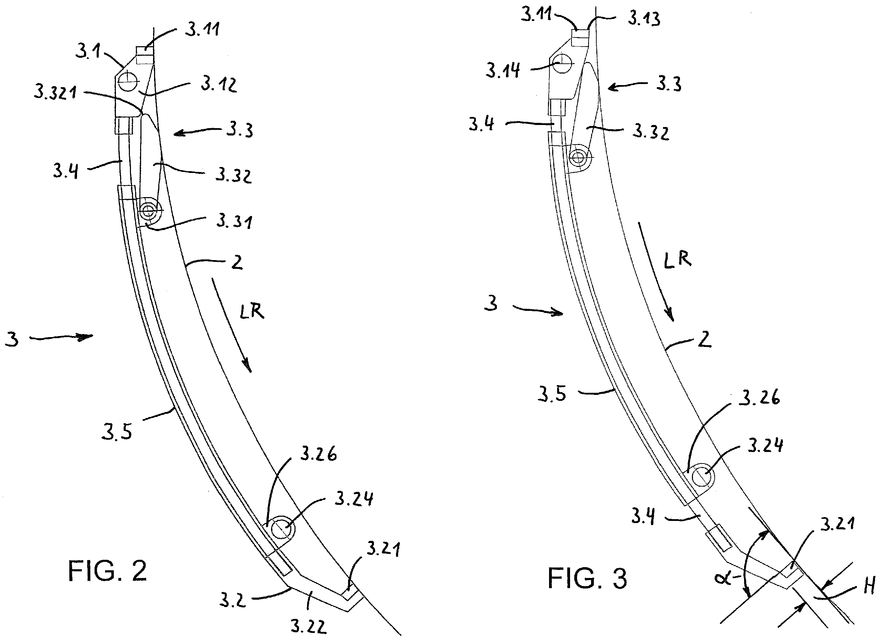

Das erste Abstreifelement 3.1 besitzt einen leistenförmigen Schleißkörper 3.11, der vorzugsweise aus Hartmetall oder Keramik hergestellt ist. Der Schleißkörper 3.11 ist an einer Halterung 3.12 befestigt, die in Laufrichtung des Fördergurtes 2 verschiebbar an dem Abstreifglied 3 gelagert ist. Die Laufrichtung des Fördergurtes 2 ist in der Zeichnung durch einen Pfeil LR angezeigt (vgl. zum Beispiel Fig. 2 und 3). Vorzugsweise ist der Schleißkörper 3.11 an der Halterung 3.12 so angeordnet, dass er eine obere Kante 3.13 des Abstreifgliedes 3 definiert.

Das zweite Abstreifelement 3.2 weist ebenfalls einen leistenförmigen Schleißkörper 3.21 auf, der vorzugsweise aus Hartmetall oder Keramik hergestellt ist. Der Schleißkörper 3.21 ist an einer Halterung 3.22 befestigt, wobei die Halterung 3.22 derart ausgeführt ist, dass das Schleißteil 3.21 mit einer Tangente, die am Fördergurt 2 an der Berührungsstelle des Schleißteils 3.21 verläuft, einen Winkel α im Bereich von 80° bis 100°, vorzugsweise 85° bis 95° einschließt. Die vom Fördergurt 2 vorstehende Höhe H des leistenförmigen Schleißkörpers 3.21 beträgt beispielsweise mehr als 1,5 cm, vorzugsweise mehr als 2,5 cm.

Erfindungsgemäß weist das Abstreifglied 3 einen Hebemechanismus 3.3 auf, der bei Verschiebung des ersten Abstreifelements 3.1 in Laufrichtung des Fördergurtes 2 ein Abheben des ersten Abstreifelements 3.1 vom Fördergurt 2 bewirkt. Das erste Abstreifelement 3.1 ist hierzu relativ zu dem Hebemechanismus 3.3 beweglich an dem Abstreifglied 3 gelagert, wobei das erste Abstreifelement 3.1 an einem Stab 3.4 befestigt ist, der in einer Führung 3.5 verschiebbar gehalten ist, wobei der Hebemechanismus 3.3 an der Führung 3.5 montiert oder angeformt ist. Die Führung 3.5 ist kanalförmig ausgebildet und weist vorzugsweise ein geschlossenes Querschnittsprofil auf. Der Stab 3.4 ist federelastisch ausgebildet und vorzugsweise aus Federstahl gefertigt. Die Führung 3.5 sowie der Stab 3.4 sind bogenförmig ausgebildet, wobei die Krümmung von Führung 3.5 und Stab 3.4 an die Rundung der Abwurftrommel 1 des Gurtförderers angepasst ist.

Zur Anbindung an die flexiblen Tragelemente 4a, 4b, z.B. Drahtseile, weist das jeweilige Abstreifglied 3 eine Durchgangsöffnung 3.14 in der Halterung 3.12 des ersten Abstreifelements 3.1 sowie eine Durchgangsöffnung 3.24 in der Nähe des zweiten Abstreifelements (Sekundärabstreifers) 3.2 auf. Die Durchgangsöffnung 3.24 in der Nähe des Sekundärabstreifers 3.2 ist vorzugsweise durch eine an beiden Enden offene Hülse 3.25 definiert, die unmittelbar oder über eine Lasche 3.26 mit der Führung 3.5 des Stabes 3.4 verbunden ist. Die Längsachse der Hülse 3.25 und die Längsachse der kanalförmigen Durchgangsöffnung 3.14 in der Halterung 3.12 des oberen Abstreifelements 3.1 verlaufen im Wesentlichen parallel zueinander, aber schräg zu der Führung 3.5 und dem Stab 3.4. Der Abstand der Durchgangsöffnungen 3.14, 3.24 des jeweiligen Abstreifgliedes 3 liegt beispielsweise im Bereich von 15 bis 30 cm, und kann insbesondere ca. 20 cm betragen. Der Abstand der Durchgangsöffnungen 3.14, 3.24 des Abstreifgliedes 3 hängt vom Durchmesser der vom Fördergurt umschlungenen Abwurftrommel ab. Bei einem Trommeldurchmesser im Bereich von 80 - 150 cm kann der Abstand der Durchgangsöffnungen 3.14, 3.24 beispielsweise ca. 28 cm betragen; bei einem Trommeldurchmesser im Bereich von 50 - 80 cm wird der Abstand der Durchgangsöffnungen 3.14, 3.24 dagegen z.B. ca. 18 cm betragen. Bei einem kleineren Trommeldurchmesser, z.B. im Bereich von 30 - 50 cm, wird der Abstand der Durchgangsöffnungen 3.14, 3.24 des jeweiligen Abstreifgliedes 3 z.B. ca. 8 - 9 cm betragen.

Im montierten Zustand der Abstreifvorrichtung verlaufen die Tragseile bzw. länglichen flexiblen Tragelemente 4a, 4b mit den aneinandergereihten Abstreifgliedern 3 entlang einer Raumkurve, die einem Abschnitt einer Schraubenlinie (Helix) entspricht. Die Führungen 3.5 für die in Gurtlaufrichtung LR verschiebbaren Stäbe 3.4 sind dabei parallel zueinander angeordnet und vorzugsweise parallel zu einer Radialebene der Abwurftrommel 1 ausgerichtet, wobei die Radialebene senkrecht zur Drehachse der Abwurftrommel 1 liegt. Die Tragseile bzw. länglichen flexiblen Tragelemente 4a, 4b sind an einem Tragrahmen (Ausleger) oder Seitenverkleidungsplatten (nicht gezeigt) im Bereich der Drehlager der Abwurftrommel 1 befestigt.

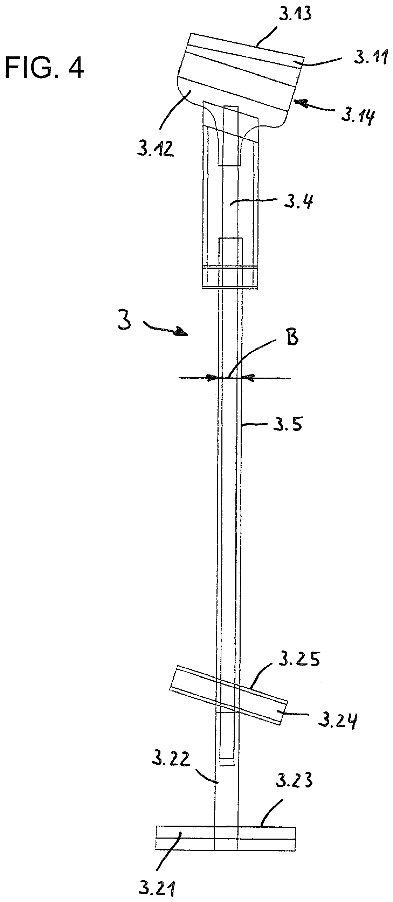

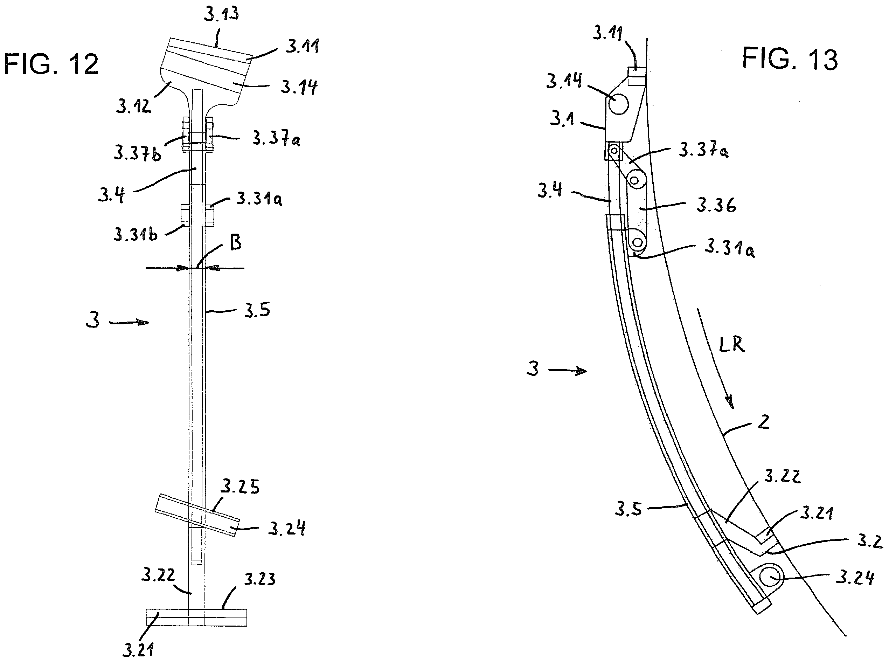

Des Weiteren ist in der Zeichnung zu erkennen, dass die obere Kante 3.13 des Schleißkörpers 3.11 einen spitzen Winkel mit der Längsachse der kanalförmigen Durchgangsöffnung 3.14 der Halterung 3.12 einschließt (vgl. insbesondere Fig. 4 und 12). Die aneinandergereihten Abstreifglieder 3 definieren somit der Gurtlaufrichtung LR schräg zugewandte Abstreifkanten 3.13 (vgl. Fig. 1 und 9). Die Abstreifkanten 3.13 benachbarter Abstreifglieder 3 sind stufenförmig angeordnet, so dass die Abstreifkante 3.13 des tiefer angeordneten Schleißkörpers 3.11 teilweise im "Schatten" des höher angeordneten Schleißkörpers 3.11 liegt. Diese teilweise Überlappung der oberen Schleißkörper 3.11 stellt zusammen mit ihrer Schrägstellung relativ zur Gurtlaufrichtung LR sicher, dass sich ein aus der Gurtoberfläche vorstehender Gurtschaden oder Fremdkörper nicht an einem einzelnen Schleißkörper 3.11 verhaken kann.

Das untere Abstreifelement 3.2 des jeweiligen Abstreifgliedes 3 ist so ausgebildet, dass sich die unteren Schleißkörper 3.21 benachbarter Abstreifglieder 3 ebenfalls einander überlappen (vgl. Fig. 1 und 9). Die von den unteren Schleißkörpern 3.21 definierten Abstreifkanten 3.23 sind stufenförmig angeordnet. Die Längsachse des jeweiligen unteren Schleißkörpers 3.21 bzw. die von ihm definierte Abstreifkante 3.23 ist im montierten Zustand der Abstreifvorrichtung im Wesentlichen parallel zur Drehachse der Abwurftrommel 1 ausgerichtet.

Die Halterungen 3.12, 3.22 mit den Schleißkörpern 3.11, 3.21 sowie die der Durchführung des Seils bzw. flexiblen Tragelements 4b dienende Hülse 3.25 stehen gegenüber den Längsseiten der Führung 3.5 und dem darin verschiebbar aufgenommenen Stab 3.4 vor, so dass zwischen den benachbarten Abstreifgliedern 3, insbesondere den Führungen 3.5, längliche Durchgangsöffnungen 5 verbleiben, durch die gegebenenfalls vom Fördergurt 2 abgelöstes Fördergutmaterial radial nach außen gelangen kann. Durch die von diesen Durchgangsöffnungen 5 definierten Freiräume wird ein Aufbauen von abgelöstem Fördergutmaterial hinter den Führungen 3.5 verhindert. Die Führungen 3.5 der Stäbe 3.4 benachbarter Abstreifglieder 3 sind beispielsweise voneinander in einem Maß beabstandet, welches beispielsweise mindestens dem Vierfachen der Breite B der jeweiligen Führung 3.5 entspricht.

Der aus der Führung 3.5 herausragende Abschnitt des Stabes 3.4, an welchem das obere Abstreifelement 3.1 befestigt ist, kann mit einem flexiblen Mantel, beispielsweise einem Faltenbalg versehen sein, der das Innere der Führung 3.5 vor Verschmutzung schützt. Ein solcher Schutz vor Verschmutzung (in der Zeichnung nicht gezeigt) ist vorzugsweise bei allen hier dargestellten Ausführungsbeispielen der Abstreifglieder 3 vorgesehen.

Bei dem in den Figuren 1 bis 4 dargestellten Ausführungsbeispiel ist die Führung 3.5 an ihrem oberen Ende mit einem Gelenklager 3.31 versehen. An dem Gelenklager 3.31, das an der dem Fördergurt 2 zugewandten Seite der Führung 3.5 angeordnet ist, ist ein keilartiger Körper (Hebelkeil) 3.32 schwenkbar gelagert, der Teil des Hebemechanismus 3.3 ist. Der keilartige Körper 3.32 definiert eine Aufschiebefläche oder Aufschiebekante 3.321, wobei die Halterung 3.12 des ersten Abstreifelements 3.1 bei Verschiebung desselben in Laufrichtung LR des Fördergurtes 2 auf die Aufschiebefläche oder Aufschiebekante 3.321 aufgeschoben und dadurch vom Fördergurt 2 abgehoben wird (vgl. Fig. 2 und 3). Das als Sekundärabstreifer dienende zweite Abstreifelement 3.2 ist am unteren Ende des Stabes 3.4 befestigt. Oberhalb des zweiten Abstreifelements 3.2 ist eine Durchgangsöffnung 3.24 (Hülse 3.25) zur Durchführung eines (4b) der Seile bzw. flexiblen länglichen Tragelemente am unteren Ende der Führung 3.5 angebracht. Die Durchgangsöffnung (z.B. Bohrung) 3.14 zur Durchführung eines zweiten Seils bzw. flexiblen länglichen Tragelements 4a ist in der Halterung 3.12 des oberen leistenförmigen Schleißelements 3.11 ausgebildet.

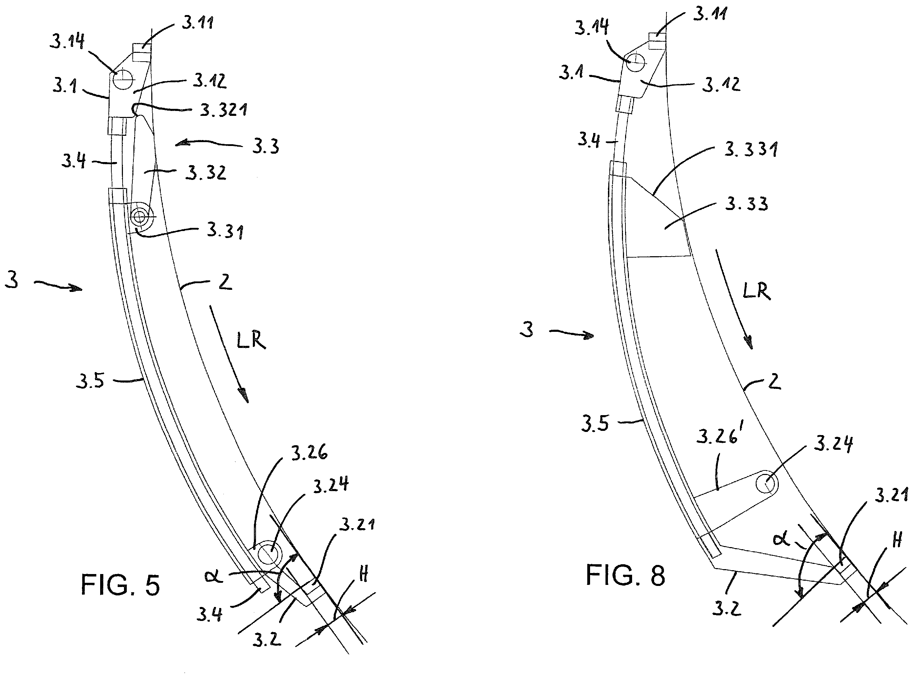

Das in Fig. 5 dargestellte Abstreifglied 3 unterscheidet sich von dem in den Figuren 2 bis 4 gezeigten Ausführungsbeispiel dadurch, dass das zweite Abstreifelement 3.2 nicht am unteren Ende des verschiebbaren Stabes 3.4, sondern am unteren Ende der Führung 3.5 befestigt ist.

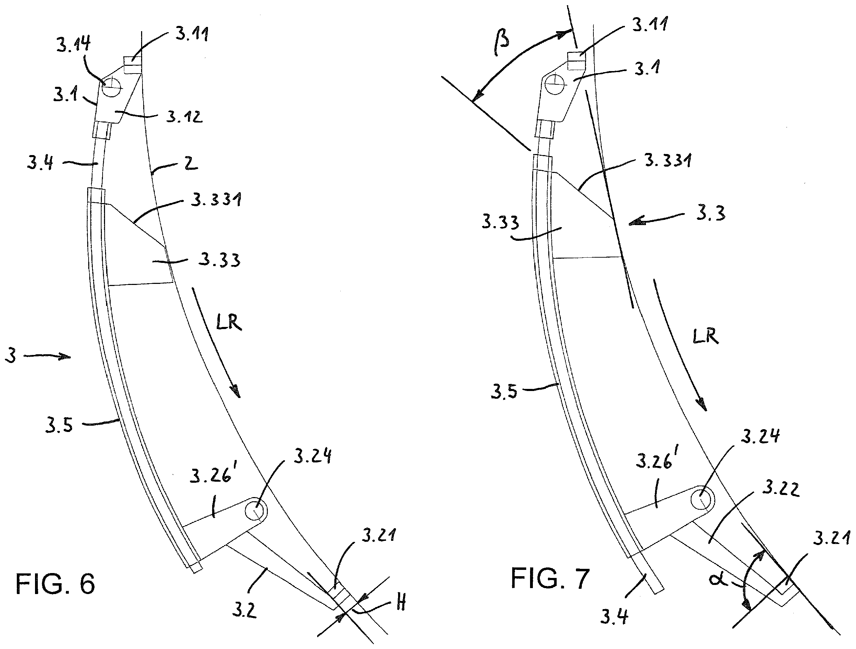

Die Figuren 6 und 7 zeigen ein weiteres Ausführungsbeispiel eines Abstreifgliedes einer erfindungsgemäßen Vorrichtung. Hier ist die bogenförmige Führung 3.5 des Stabes 3.4, an dem das erste Abstreifelement 3.1 befestigt ist, mit einem Stützelement 3.33 versehen, welches im Normalbetrieb mit geringem Abstand vom Fördergurt 2 angeordnet ist oder diesen ohne oder nur mit geringer Andruckkraft kontaktiert, und welches sich bei Verschiebung des ersten Abstreifelements 3.1 in Gurtlaufrichtung LR auf dem Fördergurt 2 abstützt. Das Stützelement 3.33 ist steg- oder plattenförmig ausgebildet. Seine Vorderkante 3.331 verläuft schräg zu einer am Fördergurt 2 anliegenden Tangente, so dass letztere mit der Vorderkante 3.331 einen Winkel β im Bereich von 35° bis 50° einschließt. Am Ende der bogenförmigen Führung 3.5 ist eine sich in Richtung erstreckende Lasche 3.26' an der Führung 3.5 befestigt. Die Lasche 3.26' weist eine Durchgangsöffnung 3.24 bzw. Hülse 3.25 zur Durchführung eines der Seile bzw. flexiblen länglichen Tragelemente auf. Eine zweite Durchgangsöffnung (z.B. Bohrung) 3.14 zur Durchführung eines zweiten Seils bzw. flexiblen länglichen Tragelements 4a ist wiederum in der Halterung 3.12 des oberen leistenförmigen Schleißelements 3.11 ausgebildet. An der Lasche 3.26' ist zudem eine Halterung 3.22 für das untere leistenförmige Schleißelement 3.21 angeformt oder befestigt. Im montierten Zustand des Abstreifgliedes 3 endet die Lasche 3.26' mit Abstand vom Fördergurt 2, während das zweite Schleißelement 3.21 aufgrund des durch die Durchgangsöffnung 3.24 bzw. Hülse 3.25 durchgeführten und gespannten Seiles bzw. flexiblen Tragelements 4b unter Andruck das Förderband 2 kontaktiert. Die Führung 3.5 des Stabes 3.4, der vorzugsweise aus Federstahl besteht, ist in Bezug auf die Rundung der Abwurftrommel 1 so geformt und ausgerichtet, dass das am oberen Ende des Stabes 3.4 befestigte erste Abstreifelement 3.1 bei seiner Verschiebung in Laufrichtung LR des Fördergurtes 2 von letzterem abgehoben wird (vgl. Fig. 6 und 7).

Das in Fig. 8 dargestellte Ausführungsbeispiel unterscheidet sich von dem in den Figuren 6 und 7 gezeigten Beispiel dadurch, dass das zweite Abstreifelement (Sekundärabstreifer) 3.2 am unteren Ende des aus der rohrförmigen Führung 3.5 herausragenden Stabes 3.4 befestigt ist. Diese Variante ähnelt insoweit dem in den Fig. 2 und 3 dargestellten Ausführungsbeispiel.

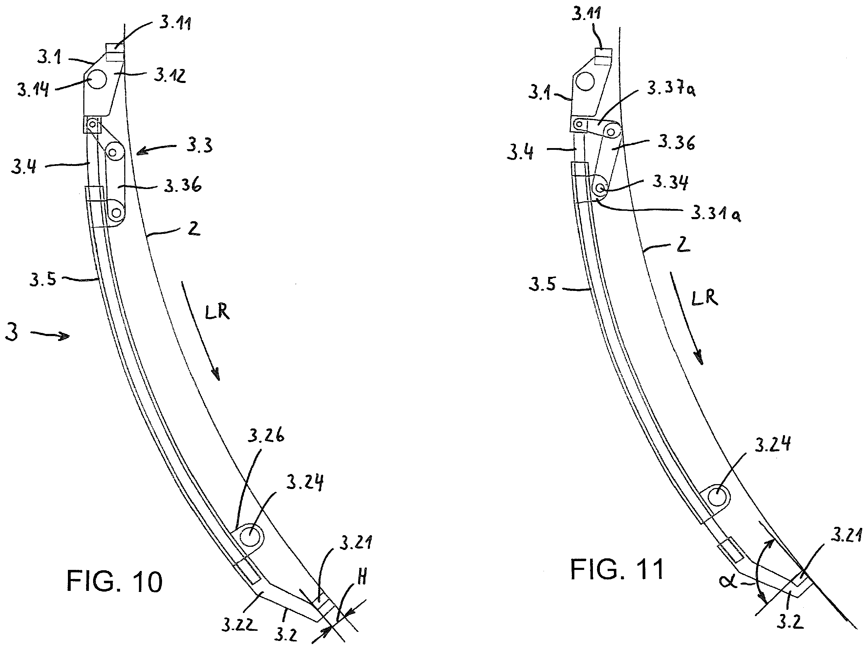

In den Figuren 9 bis 12 ist ein weiteres Ausführungsbeispiel der erfindungsgemäßen Vorrichtung skizziert. In diesem Fall ist der Hebemechanismus 3.3, der bei Verschiebung des ersten Abstreifelements (Primärabstreifers) 3.1 in Laufrichtung LR des Fördergurtes 2 ein Abheben dieses Abstreifelements 3.1 vom Fördergurt 2 bewirkt, als Hebelgelenkmechanismus ausgeführt. Hierzu sind am oberen Ende der bogenförmigen Führung 3.5 zwei in Richtung Fördergurt 2 vorstehenden Laschen 3.31a, 3.31b befestigt, die miteinander fluchtende Bohrungen (Durchgangslöcher) 3.34 aufweisen. Die Laschen 3.31a, 3.31b definieren ein gabelförmiges Gelenklager. An der mit dem Stab 3.4 verbundenen Halterung 3.12 des oberen Schleißkörpers 3.11 ist eine weitere Bohrung 3.35 ausgebildet, deren Achse parallel zu der durch die Laschen 3.31a, 3.31b definierten Gelenkachse verläuft. An den Laschen 3.31a, 3.31b ist ein Gelenkhebel 3.36 angelenkt, der mit zwei parallel zueinander angeordneten Gelenkhebeln 3.37a, 3.37b verbunden ist, die an der Bohrung 3.35 in der Halterung 3.12 des Schleißkörpers 3.11 angelenkt sind. Der an den Laschen 3.31a, 3.31b schwenkbar gelagerte Gelenkhebel 3.36 ist deutlich länger als die an der Halterung 3.12 schwenkbar gelagerten Gelenkhebel 3.37a, 3.37b. Im Normalbetrieb des Abstreifgliedes 3 sind die Gelenkhebel 3.36, 3.37a, 3.37b vom Fördergurt 2 beabstandet, während der obere Schleißkörper 3.11 des Abstreifelements 3.1 am Fördergurt 2 anliegt (vgl. Fig. 10). Wird das erste Abstreifelement 3.1 durch einen aus dem Fördergurt 2 vorstehenden Gurtschaden oder durch einen im Fördergurt 2 festsitzenden Fremdkörper in Gurtlaufrichtung LR verschoben, so schwenken die Gelenkhebel 3.36, 3.37a, 3.37b in Richtung Fördergurt 2, kontaktieren den Fördergurt 2 und stützen sich daran ab, so dass die Halterung 3.12 des ersten Abstreifelements 3.1 mit dem Schleißkörper 3.11 vom Fördergurt 2 abhebt (vgl. Fig. 11).

Das in Gurtlaufrichtung LR nachfolgende zweite Abstreifelement 3.2 des Abstreifgliedes 3 gemäß dem in den Figuren 8 bis 12 gezeigten Ausführungsbeispiel ist am unteren Ende des aus der rohrförmigen Führung 3.5 herausragenden Stabes 3.4 befestigt ist. Insoweit ähnelt diese Variante dem in den Figuren 1 bis 4 gezeigten Ausführungsbeispiel. Auch ist die Durchgangsöffnung 3.24 (Hülse 3.25) für das untere Seil bzw. flexible längliche Tragelement 4b wiederum am unteren Ende der bogenförmigen Führung 3.5 angeordnet.

Ein weiteres Ausführungsbeispiel eines erfindungsgemäßen Abstreifgliedes 3 ist in Fig. 13 skizziert. Diese Variante unterscheidet sich von dem in den Figuren 10 und 11 gezeigten Ausführungsbeispiel dadurch, dass das untere, zweite Abstreifelement (Sekundärabstreifer) 3.2 in Gurtlaufrichtung LR vor der Durchgangsöffnung 3.24 (Hülse 3.25) für das untere Seil bzw. flexible längliche Tragelement 4b angeordnet ist. Die Durchgangsöffnung 3.24 (Hülse 3.25) ist dabei am unteren Ende der bogenförmigen Führung 3.5, und zwar an der dem Fördergurt 2 zugewandten Seite der Führung 3.5 angeordnet. Diese Variante hat den Vorteil, dass das obere Abstreifelement 3.1 vom Fördergurt 2 wegschwenkt, falls das obere Seil bzw. flexible längliche Tragelement 4a reißen sollte. Eine ungewollte Schädigung des Fördergurtes 2 durch das obere Abstreifelement 3.1 wird somit verhindert.

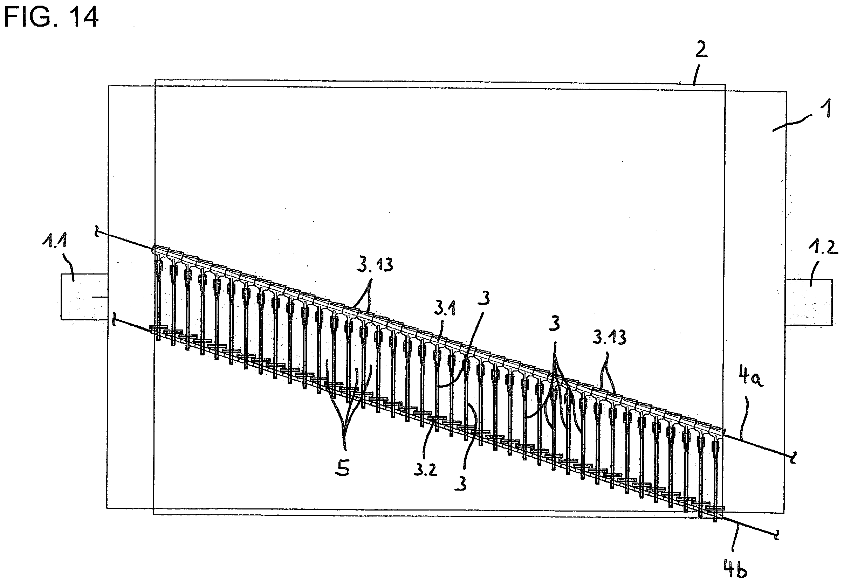

Das in den Figuren 14 bis 16 dargestellte Ausführungsbeispiel der erfindungsgemäßen Vorrichtung unterscheidet sich von der in Fig. 13 gezeigten Variante dadurch, dass der Hebemechanismus 3.3, der bei Verschiebung des ersten Abstreifelements 3.1 in Laufrichtung LR des Fördergurtes 2 ein Abheben dieses Abstreifelements 3.1 vom Fördergurt 2 bewirkt, als Federhebelmechanismus ausgeführt. Hierzu ist am oberen Ende der bogenförmigen Führung 3.5 mindestens eine in Richtung Fördergurt 2 vorstehende Lasche 3.31' befestigt, die eine Öffnung oder einen Spalt 3.34' aufweist. Die Öffnung bzw. der Spalt 3.34' dient der drehbaren Lagerung einer Schenkelfeder 3.38. Die Öffnung (Spalt) 3.34' mündet an einer dem ersten Abstreifelement 3.1 zugewandten Seite der Lasche 3.31'. Die Schenkelfeder 3.38 weist einen bügelförmigen Abschnitt 3.381 auf, dessen Schenkel vorzugsweise in spiralförmige Abschnitte 3.38a, 3.38b übergehen. Der jeweilige spiralförmige Abschnitt 3.38a, 3.38b besteht hier beispielsweise aus einer einzelnen Windung. An den spiralförmigen Abschnitt 3.38a, 3.38b schließt sich einstückig ein mit dem Stab 3.4 bzw. der Halterung 3.12 verbundener Schenkel 3.382, 3.383 an. Die Schenkel 3.382, 3.383 sind hierzu an ihren Enden abgewinkelt, so ihre Stirnseiten einander zugewandt sind. Die Enden sind in Ausnehmungen oder Bohrungen 3.121, 3.122 der Halterung 3.12 formschlüssig sowie drehbar eingesteckt.

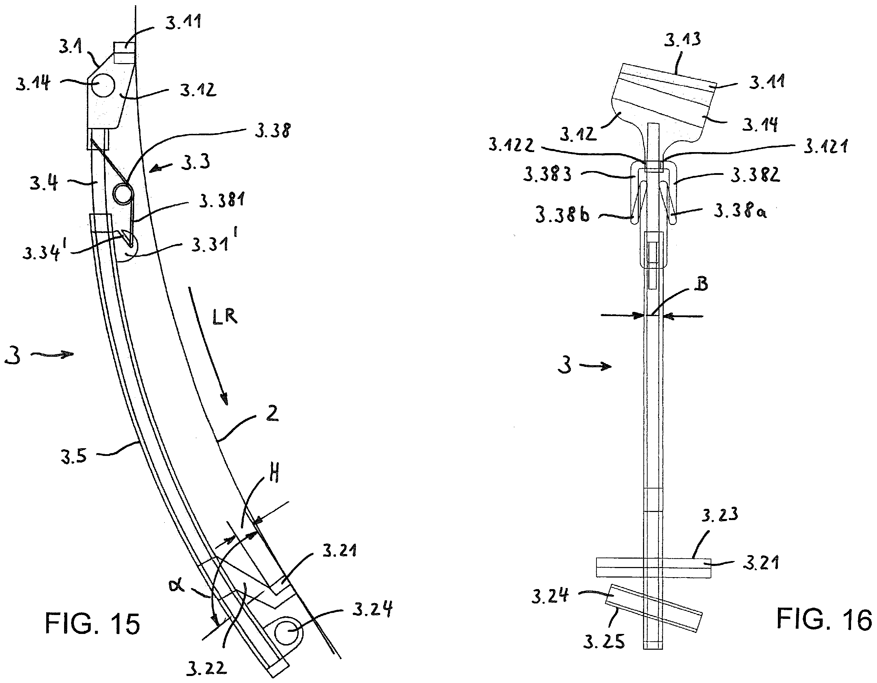

Im Normalbetrieb des Abstreifgliedes 3 sind die spiralförmigen Abschnitte (Windungen) 3.38a, 3.38b der Schenkelfeder 3.38 vom Fördergurt 2 beabstandet, während der obere Schleißkörper 3.11 des Abstreifelements 3.1 am Fördergurt 2 anliegt (vgl. Fig. 15). Wird das erste Abstreifelement 3.1 durch einen aus dem Fördergurt 2 vorstehenden Gurtschaden oder durch einen im Fördergurt 2 festsitzenden Fremdkörper in Gurtlaufrichtung LR verschoben, so bewegen sich die Windungen 3.38a, 3.38b in Richtung Fördergurt 2, kontaktieren den Fördergurt 2 und stützen sich daran ab. Die Schenkel 3.382, 3.383 der Feder 3.38 wirken dabei als Hebel und heben, nachdem die Windungen 3.38a, 3.38b den Fördergurt berühren und sich daran abstützen, die Halterung 3.12 des ersten Abstreifelements 3.1 mit dem Schleißkörper 3.11 vom Fördergurt 2 ab.

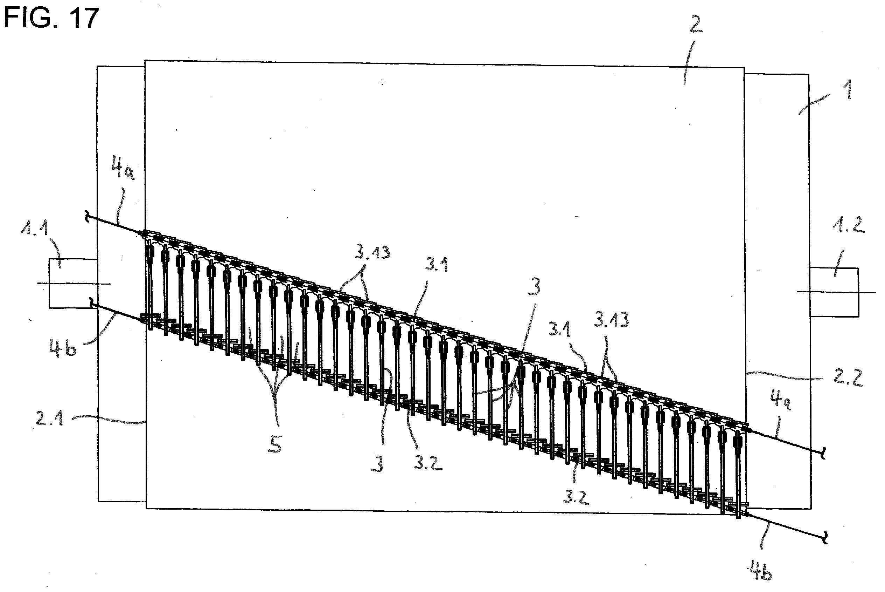

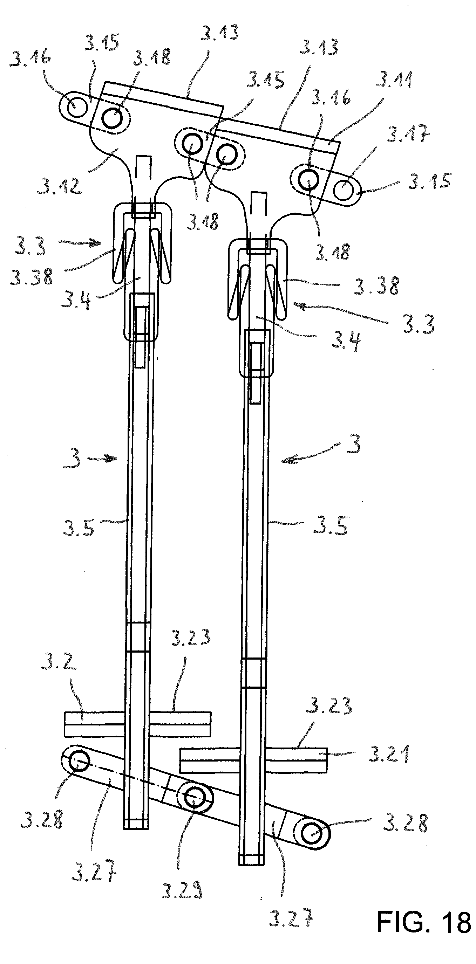

Das in den Figuren 17 und 18 dargestellte Ausführungsbeispiel der erfindungsgemäßen Vorrichtung unterscheidet sich von den zuvor gezeigten Ausführungsbeispielen dadurch, dass die Abstreifglieder 3 untereinander nicht durch längliche Tragelemente wie Seile, sondern durch platten- oder laschenförmige Verbindungselemente 3.15, 3.27 verbunden sind, wobei je zwei benachbarte Abstreifglieder 3 durch mindestens zwei solcher Verbindungselemente 3.15, 3.27 miteinander verbunden sind.

Das erste Abstreifelement 3.1 des jeweiligen Abstreifglieds 3 weist hierzu wiederum eine mit dem Stab 3.4 verbundene Halterung 3.12 auf. Die Halterungen 3.12 zweier benachbarter Abstreifglieder 3 sind dabei durch ein platten- oder laschenförmiges Verbindungselement 3.15 miteinander verbunden. Das jeweilige Verbindungselement 3.15 weist zwei Durchgangsöffnungen oder Bohrungen 3.16, 3.17 auf, in die mit der Halterung 3.12 verbundene, beispielsweise verschraubte Bolzen 3.18 oder durch Formguß erzeugte "Nocken" oder Zapfen formschlüssig eingreifen. Die benachbarten Halterungen 3.12 sind über das platten- oder laschenförmige Verbindungselement 3.15 gelenkig miteinander verbunden.

Die Führung 3.5 des Stabes 3.4 ist mit einem laschenförmigen Ansatz 3.27 als Verbindungselement versehen. Der Ansatz 3.27 kann auch als Querteil oder Anschlussteil bezeichnet werden. Vorzugsweise ist der Ansatz 3.27 in Laufrichtung LR des Fördergurtes 2 gesehen hinter dem zweiten Abstreifelement 3.2 angeordnet. Der Ansatz 3.27 weist zur Anbindung eines entsprechenden Ansatzes 3.27 eines benachbarten Abstreifglieds 3 Durchgangsöffnungen oder Bohrungen 3.28 auf, in die Verbindungsbolzen 3.29 eingesetzt bzw. einsteckbar sind. Der laschenförmige Ansatz 3.27 verläuft schäg zur Längsachse der Führung 3.5.

Die Anzahl der miteinander zu verbindenden Abstreifglieder 3 hängt von der zu reinigenden Breite des Fördergurtes 2 ab. Beispielsweise werden soviele Abstreifglieder 3 aneinander gereiht und flexibel bzw. gelenkig miteinander verbunden, dass sich der aus den Abstreifgliedern 3 zusammengesetzte Abstreifkörper von der einen Gurtkante 2.1 bis zu der anderen Gurtkante 2.2 erstreckt. Zur Anordnung des Abstreifkörpers entlang einer Raumkurve der den Fördergurt 2 umlenkenden Abwurftrommel 1 werden an den Enden des Abstreifkörpers flexible oder elastische Tragelemente 4a, 4b in Form von Seilen, Ketten, Federstäben oder dergleichen montiert. Die Enden dieser länglichen Tragelemente 4a, 4b werden hierzu beispielsweise an den Durchgangsöffnungen oder Bohrungen 3.16, 3.17 bzw. 3.28 der platten- oder laschenförmigen Verbindungselemente 3.15 bzw. Ansätze (Anschlussteile) 3.27 angebunden.

Die Ausführung der vorliegenden Erfindung ist nicht auf die in der Zeichnung dargestellten Ausführungsbeispiele beschränkt. Vielmehr sind zahlreiche weitere Varianten denkbar, die auch bei von den gezeigten Beispielen abweichender Gestaltung von der in den beiliegenden Ansprüchen angegebenen Erfindung Gebrauch machen, soweit sie nicht den durch die Ansprüche begrenzten Schutzumfang der Erfindung verlassen. So könnte beispielsweise die Verbindungslasche 3.15 in Fig. 18 auch auf einer Seite unlösbar und/oder einstückig mit der Halterung 3.12 ausgeführt sein und hingegen an der anderen Seite lösbar verbindbar mit der Halterung 3.12 eines benachbarten Abstreifgliedes 3 ausgeführt sein. Des Weiteren kann das in Fig. 5 dargestellte Ausführungsbeispiel dahingehend abgewandelt werden, dass die Durchgangsöffnung 3.24 zur Anbindung des unteren Seiles bzw. länglichen Tragelements 4b in Laufrichtung LR des Fördergurtes 2 hinter dem zweiten Abstreifelement (Sekundärabstreifer) 3.2 angeordnet ist. Ferner kann das jeweilige Abstreifglied 3 anstelle der Durchgangsöffnungen 3.14, 3.24 auch Klemmen zur Anbindung der flexiblen Tragelemente 4a, 4b aufweisen.

## Patentansprüche

1. Vorrichtung zum Abstreifen von Material von einem Fördergurt (2) eines Gurtförderers im Bereich der Rundung einer Abwurftrommel (1), unterhalb der Abwurfstelle des Gurtförderers, mit einer Vielzahl von Abstreifgliedern (3), die aneinandergereiht angeordnet und durch mindestens zwei längliche, mit Abstand voneinander angeordnete Tragelemente (4a, 4b) getragen sind, wobei mindestens eines der Abstreifglieder (3) ein erstes Abstreifelement (3.1) und ein dem ersten Abstreifelement (3.1) in Laufrichtung (LR) des Fördergurtes (2) nachfolgendes zweites Abstreifelement (3.2) aufweist, **dadurch gekennzeichnet, dass** das Abstreifglied (3), welches das erste Abstreifelement (3.1) und das in Laufrichtung des Fördergurtes nachfolgende zweite Abstreifelement (3.2) aufweist, einen Hebemechanismus (3.3) aufweist, der bei Verschiebung des ersten Abstreifelements (3.1) in Laufrichtung (LR) des Fördergurtes (2) ein Abheben des ersten Abstreifelements (3.1) vom Fördergurt (2) bewirkt, wobei das erste Abstreifelement (3.1) relativ zu dem Hebemechanismus (3.3) beweglich an dem Abstreifglied (3) gelagert ist, wobei das erste Abstreifelement (3.1) an einem Stab (3.4) befestigt ist, der in einer Führung (3.5) verschiebbar gehalten ist, und wobei der Hebemechanismus (3.3) an der Führung (3.5) angebracht oder angeformt ist.

2. Vorrichtung nach Anspruch 1, **dadurch gekennzeichnet, dass** die Führungen (3.5) der Stäbe (3.4) benachbarter Abstreifglieder (3) voneinander in einem Maß beabstandet sind, welches größer als die Breite (B), vorzugsweise größer als das Doppelte der Breite (B) der jeweiligen Führung (3.5) ist.

3. Vorrichtung nach Anspruch 1 oder 2, **dadurch gekennzeichnet, dass** das zweite Abstreifelement (3.2) an der Führung (3.5) befestigt ist.

4. Vorrichtung nach Anspruch 1 oder 2, **dadurch gekennzeichnet, dass** das zweite Abstreifelement (3.2) an dem Stab (3.4) befestigt ist.

5. Vorrichtung nach einem der Ansprüche 1 bis 4, **dadurch gekennzeichnet, dass** der Stab (3.4) aus federelastischem Material, vorzugsweise aus Federstahl gefertigt ist.

6. Vorrichtung nach einem der Ansprüche 1 bis 5, **dadurch gekennzeichnet, dass** die Führung (3.5) und/oder der Stab (3.4) bogenförmig ausgebildet sind, wobei die Krümmung der Führung (3.5) an die Rundung der Abwurftrommel (1) des Gurtförderers angepasst ist.

7. Vorrichtung nach einem der Ansprüche 1 bis 6, **dadurch gekennzeichnet, dass** die zweiten Abstreifelemente (3.2) benachbarter Abstreifglieder (3) überlappend zueinander angeordnet sind, derart, dass ein Abstreifelement (3.2) von einem in Laufrichtung (LR) des Fördergurtes (2) gesehen vorgeordneten Abstreifelement (3.2) eines benachbarten Abstreifgliedes teilweise überdeckt ist und selbst ein in Laufrichtung (LR) des Fördergurtes (2) nachgeordnetes Abstreifelement (3.2) eines benachbarten Abstreifgliedes (3) teilweise überdeckt.

8. Vorrichtung nach einem der Ansprüche 1 bis 7, **dadurch gekennzeichnet, dass** der Hebemechanismus (3.3) als Hebelgelenkmechanismus oder Federhebelmechanismus ausgeführt ist.

9. Vorrichtung nach einem der Ansprüche 1 bis 7, **dadurch gekennzeichnet, dass** der Hebemechanismus (3.3) einen keilartigen Körper (3.32) aufweist, der eine Aufschiebefläche oder Aufschiebekante (3.321) definiert, wobei eine oder die Halterung (3.12) des ersten Abstreifelements (3.1) bei Verschiebung desselben in Laufrichtung (LR) des Fördergurtes (2) auf die Aufschiebefläche oder Aufschiebekante (3.321) aufgeschoben und dadurch vom Fördergurt (2) abgehoben wird.

10. Vorrichtung nach einem der Ansprüche 1 bis 9, **dadurch gekennzeichnet, dass** das jeweilige längliche Tragelement (4a, 4b) flexibel und/oder elastisch ausgebildet ist.

11. Vorrichtung nach einem der Ansprüche 1 bis 10, **dadurch gekennzeichnet, dass** das jeweilige längliche Tragelement (4a, 4b) aus mindestens einem Seil, vorzugsweise Drahtseil, mindestens einem Federstahl, insbesondere Federstahlstab, und/oder mindestens einer Metallkette gebildet ist.

12. Vorrichtung nach einem der Ansprüche 1 bis 11, **dadurch gekennzeichnet, dass** die aneinandergereihten Abstreifglieder (3) mittels der Tragelemente (4a, 4b) entlang einer Raumkurve an der Abwurftrommel (1) positionierbar sind.

13. Vorrichtung nach einem der Ansprüche 1 bis 6 oder einem der Ansprüche 7 bis 12 in Verbindung mit Anspruch 1 oder 2, **dadurch gekennzeichnet, dass** die Führung (3.5) mit einem Ansatz versehen ist, der eine Durchgangsöffnung (3.24) oder Klemme zur Anbindung des mindestens einen zweiten länglichen Tragelements (4b) aufweist.

14. Vorrichtung nach Anspruch 13, **dadurch gekennzeichnet, dass** die Durchgangsöffnung (3.24) oder Klemme zur Anbindung des mindestens einen zweiten länglichen Tragelements (4b) in Laufrichtung (LR) des Fördergurtes (2) hinter dem zweiten Abstreifelement (3.2) angeordnet ist.

15. Vorrichtung nach einem der Ansprüche 1 bis 6, oder einem der Ansprüche 7 bis 14 in Verbindung mit Anspruch 1 oder 2, **dadurch gekennzeichnet, dass** das erste Abstreifelement (3.1) eine mit dem Stab (3.4) verbundene Halterung (3.12) aufweist, die eine Durchgangsöffnung (3.14) oder Klemme zur Anbindung eines (4a) der länglichen Tragelemente aufweist.

16. Vorrichtung nach einem der Ansprüche 1 bis 12, **dadurch gekennzeichnet, dass** die Abstreifglieder (3) miteinander durch Verbindungselemente verbunden sind, wobei je zwei benachbarte Abstreifglieder (3) durch mindestens zwei der Verbindungselemente (3.15, 3.27) miteinander verbunden sind.

17. Vorrichtung nach Anspruch 16, **dadurch gekennzeichnet, dass** das erste Abstreifelement (3.1) eine mit dem Stab (3.4) verbundene Halterung (3.12) aufweist, wobei die Halterungen (3.12) zweier benachbarter Abstreifglieder (3) durch mindestens eines der Verbindungselemente (3.15) miteinander verbunden sind, und wobei die Verbindungselemente (3.15) platten- oder laschenförmig ausgebildet sind.

18. Vorrichtung nach Anspruch 16 oder 17, **dadurch gekennzeichnet, dass** die Führung (3.5) mit einem Ansatz (3.27) als Verbindungselement zur Anbindung eines entsprechenden Ansatzes (3.27) eines benachbarten Abstreifglieds (3) versehen ist.

19. Vorrichtung nach Anspruch 18, **dadurch gekennzeichnet, dass** der Ansatz (3.27) in Laufrichtung (LR) des Fördergurtes (2) gesehen hinter dem zweiten Abstreifelement (3.2) angeordnet ist.

## Claims

1. Apparatus for stripping off material from a conveying belt (2) of a belt conveyor in the region of the curve of a discharge drum (1), beneath the discharge area of the belt conveyor, having a plurality of stripping members (3) which are arranged in a row and are carried by at least two elongate carrying elements (4a, 4b) arranged spaced apart from one another, at least one of the stripping members (3) having a first stripping element (3.1) and a second stripping element (3.2) following the first stripping element (3.1) in the direction of travel (LR) of the conveying belt (2), **characterised in that** the stripping member (3), which comprises the first stripping element (3.1) and the second stripping element (3.2) following in the direction of travel (LR) of the conveying belt (2), comprises a lifting mechanism (3.3) which causes the first stripping element (3.1) to be lifted from the conveying belt (2) when the first stripping element (3.1) is moved in the direction of travel (LR) of the conveying belt (2), wherein the first stripping element (3.1) being mounted on the stripping member (3) so as to be movable relative to the lifting mechanism (3.3), wherein the first stripping element (3.1) is fixed to a rod (3.4) which is held in a movable manner in a guide (3.5), and wherein the lifting mechanism (3.3) being attached to or integrally formed on the guide (3.5).

2. Apparatus according to claim 1, **characterised in that** the guides (3.5) of the rods (3.4) of adjacent stripping members (3) are spaced apart from one another by a distance which is greater than the width (B), preferably greater than twice the width (B), of the respective guide (3.5).

3. Apparatus according to either claim 1 or claim 2, **characterised in that** the second stripping element (3.2) is fixed to the guide (3.5).

4. Apparatus according to either claim 1 or claim 2, **characterised in that** the second stripping element (3.2) is fixed to the rod (3.4).

5. Apparatus according to any of claims 1 to 4, **characterised in that** the rod (3.4) is manufactured from resilient material, preferably from spring steel.

6. Apparatus according to any of claims 1 to 5, **characterised in that** the guide (3.5) and/or the rod (3.4) is curved, the curvature of the guide (3.5) being matched to the curve of the discharge drum (1) of the belt conveyor.

7. Apparatus according to any of claims 1 to 6, **characterised in that** the second stripping elements (3.2) of adjacent stripping members (3) are arranged so as to overlap, in such a manner that a stripping element (3.2) is partially covered by a stripping element (3.2) of an adjacent stripping member that is located in front of it, when viewed in the direction of travel (LR) of the conveying belt (2), and that same stripping element partially covers a stripping element (3.2) of an adjacent stripping member (3) that is located behind it, when viewed in the direction of travel (LR) of the conveying belt (2).

8. Apparatus according to any of claims 1 to 7, **characterised in that** the lifting mechanism (3.3) is in the form of an articulated lever mechanism or spring lever mechanism.

9. Apparatus according to any of claims 1 to 7, **characterised in that** the lifting mechanism (3.3) has a wedge-like body (3.32) which defines a slide-on surface or slide-on edge (3.321), a or the holder (3.12) of the first stripping element (3.1) sliding onto the slide-on surface or slide-on edge (3.321) and thereby being lifted from the conveying belt (2) when the first stripping element is moved in the direction of travel (LR) of the conveying belt (2).

10. Apparatus according to any of claims 1 to 9, **characterised in that** each elongate carrying element (4a, 4b) is flexible and/or resilient.

11. Apparatus according to any of claims 1 to 10, **characterised in that** each elongate carrying element (4a, 4b) is formed of at least one cable, preferably wire cable, at least one spring steel, in particular spring steel rod, and/or at least one metal chain.

12. Apparatus according to any of claims 1 to 11, **characterised in that** the stripping members (3) arranged in a row can be positioned along a space curve on the discharge drum (1) by means of the carrying elements (4a, 4b).

13. Apparatus according to any of claims 1 to 6 or any of claims 7 to 12 in conjunction with either claim 1 or claim 2, **characterised in that** the guide (3.5) is provided with a projection which has a through-opening (3.24) or clamp for attaching the at least one second elongate carrying element (4b).

14. Apparatus according to claim 13, **characterised in that** the through-opening (3.24) or clamp for attaching the at least one second elongate carrying element (4b) is arranged after the second stripping element (3.2) in the direction of travel (LR) of the conveying belt (2).

15. Apparatus according to any of claims 1 to 6, or any of claims 7 to 14 in conjunction with either claim 2 or claim 3, **characterised in that** the first stripping element (3.1) has a holder (3.12) which is connected to the rod (3.4) and which has a through-opening (3.14) or clamp for attaching one (4a) of the elongate carrying elements.

16. Apparatus according to any of claims 1 to 12, **characterised in that** the stripping members (3) are interconnected by connecting elements, every two adjacent stripping members (3) being interconnected by at least two of the connecting elements (3.15, 3.27).

17. Apparatus according to claim 16, **characterised in that** the first stripping element (3.1) has a holder (3.12) connected to the rod (3.4), the holders (3.12) of two adjacent stripping members (3) being interconnected by at least one of the connecting elements (3.15), and the connecting elements (3.15) being in the form of plates or tabs.

18. Apparatus according to either claim 16 or claim 17, **characterised in that** the guide (3.5) is provided with a projection (3.27) as a connecting element for attaching a corresponding projection (3.27) of an adjacent stripping member (3).

19. Apparatus according to claim 18, **characterised in that** the projection (3.27) is arranged after the second stripping element (3.2) when viewed in the direction of travel (LR) of the conveying belt (2).

## Revendications

1. Dispositif d'enlèvement de matière d'une bande transporteuse (2) d'un convoyeur à bande au niveau de la courbure d'un tambour de largage (1), sous le site de largage du convoyeur à bande, ayant une certain nombre de membres d'enlèvement (3), qui sont agencés les uns derrière les autres et sont supportés par au moins deux éléments support (4a, 4b) longilignes, distants les uns des autres, où au moins un des membres d'enlèvement (3) présente un premier élément d'enlèvement (3.1) et un deuxième élément d'enlèvement (3.2) suivant le premier élément d'enlèvement (3.1) en direction d'avancement (LR) de la bande transporteuse (2), **caractérisé en ce que** le membre d'enlèvement (3), qui présente le premier élément d'enlèvement (3.1) et le deuxième élément d'enlèvement (3.2) suivant en direction d'avancement de la bande transporteuse (2), comprend un mécanisme de levage (3.3), qui lors du glissement du premier élément d'enlèvement (3.1) en direction d'avancement (LR) de la bande transporteuse (2), effectue un soulèvement du premier élément d'enlèvement (3.1) de la bande transporteuse (2), où le premier élément d'enlèvement (3.1) est mobile sur le membre d'enlèvement (3) par rapport au mécanisme de levage (3.3), où le premier élément d'enlèvement (3.1) est fixé sur un barreau (3.4) qui peut glisser dans un guide (3.5) et où le mécanisme de levage (3.3) est apposé ou formé sur le guide (3.5).

2. Dispositif selon la revendication 1, **caractérisé en ce que** les guides (3.5) des barreaux (3.4) de membres d'enlèvement (3) voisons sont distants les uns des autres d'une distance qui est supérieure à la largeur (B), de préférence supérieure au double de la largeur (B) de chaque guide (3.5).

3. Dispositif selon la revendication 1 ou 2, **caractérisé en ce que** le deuxième élément d'enlèvement (3.2) est fixé sur le guide (3.5).

4. Dispositif selon la revendication 1 ou 2, **caractérisé en ce que** le deuxième élément d'enlèvement (3.2) est fixé sur le barreau (3.4).

5. Dispositif selon l'une quelconque des revendications 1 à 4, **caractérisé en ce que** le barreau (3.4) est composé d'un matériau élastique, de préférence l'acier à ressort.

6. Dispositif selon l'une quelconque des revendications 1 à 5, **caractérisé en ce que** le guide (3.5) et/ou le barreau (3.4) ont une forme arquée, où la courbure du guide (3.5) est ajustée à la courbure du tambour de largage (1) du convoyeur à bande.

7. Dispositif selon l'une quelconque des revendications 1 à 6, **caractérisé en ce que** les deuxièmes éléments d'enlèvement (3.2) de membres d'enlèvement voisins sont agencés de manière à se chevaucher, de sorte qu'un élément d'enlèvement (3.2) est couvert partiellement par un élément d'enlèvement (3.2) précédent vu en direction d'avancement (LR) de la bande transporteuse (2) d'un membre d'enlèvement voisin et lui-même, couvre partiellement un élément d'enlèvement (3.2) suivant vu en direction d'avancement (LR) de la bande transporteuse (2) d'un membre d'enlèvement voisin.

8. Dispositif selon l'une quelconque des revendications 1 à 7, **caractérisé en ce que** le mécanisme de levage (3.3) est un mécanisme de type à articulation ou de type à ressort.

9. Dispositif selon l'une quelconque des revendications 1 à 7, **caractérisé en ce que** le mécanisme de levage (3.3) présente un corps de type coin (3.32), qui définit une surface ou un bord de poussée (3.321), où un ou le support (3.12) du premier élément d'enlèvement (3.1) pousse lors du glissement de celui-ci, sur la surface ou le bord de poussée (3.321) en direction d'avancement (LR) de la bande transporteuse (2) et ainsi est soulevé de la bande transporteuse (2).

10. Dispositif selon l'une quelconque des revendications 1 à 9, **caractérisé en ce que** chaque élément support longiligne (4a, 4b) est flexible et/ou élastique.

11. Dispositif selon l'une quelconque des revendications 1 à 10, **caractérisé en ce que** chaque élément support longiligne (4a, 4b) est composé d'au moins un câble, de préférence un câble métallique, au moins un acier à ressort, en particulier un barreau en acier à ressort, et/ou au moins une chaine métallique.

12. Dispositif selon l'une quelconque des revendications 1 à 11, **caractérisé en ce que** les membres d'enlèvement (3) successifs sont positionnables à l'aide des éléments support (4a, 4b) le long d'une courbe sur le tambour de largage (1).

13. Dispositif selon l'une quelconque des revendications 1 à 6 ou l'une des revendications 7 à 12 en liaison avec la revendication 1 ou 2, **caractérisé en ce que** le guide (3.5) est muni d'une base qui présente une ouverture de passage (3.24) ou une pince pour la fixation d'au moins un deuxième élément support longiligne (4b).

14. Dispositif selon la revendication 13, **caractérisé en ce que** l'ouverture de passage (3.24) ou la pince pour la fixation d'au moins un deuxième élément support longiligne (4b) est agencé derrière le deuxième élément d'enlèvement (3.2) en direction d'avancement (LR) de la bande transporteuse (2).

15. Dispositif selon l'une quelconque des revendications 1 à 6 ou l'une des revendications 7 à 14 en liaison avec la revendication 1 ou 2, **caractérisé en ce que** le premier élément d'enlèvement (3.1) présente un support (3.12) lié à un barreau (3.4), lequel support (3.12) comporte une ouverture de passage (3.14) ou une pince pour la fixation d'un (4a) des éléments support longilignes.

16. Dispositif selon l'une quelconque des revendications 1 à 12, **caractérisé en ce que** le membre d'enlèvement (3) est lié par des éléments de liaison, où tout couple de membres d'enlèvement (3) voisins est relié par au moins deux des éléments de liaison (3.15, 3.27).

17. Dispositif selon la revendication 16, **caractérisé en ce que** le premier élément d'enlèvement (3.1) présente un support (3.12) lié à un barreau (3.4), où les supports (3.12) de deux éléments d'enlèvement (3) voisins sont liés les uns aux autres par au moins un des éléments de liaison (3.15), et où les éléments de liaison (3.15) ont une forme de plaque ou de patte.

18. Dispositif selon la revendication 16 ou 17, **caractérisé en ce que** le guide (3.5) est muni d'une base (3.27) comme élément de liaison pour relier une base correspondante (3.27) d'un membre d'enlèvement (3) voisin.

19. Dispositif selon la revendication 18, **caractérisé en ce que** la base (3.27) est agencé derrière le deuxième élément d'enlèvement (3.2) en direction d'avancement (LR) de la bande transporteuse (2).
